# EUROPEAN PATENT SPECIFICATION

(11) **EP 3 495 912 B1**
(45) Date of publication and mention of the grant of the patent: **17.02.2021**
(21) Application number: 18200300.4
(22) Date of filing: 15.10.2018
(51) Int. Cl.: G05D 23/19, F28F 27/02, G05D 7/06

(54) **PARALLEL VALVE CONTROL**
STEUERUNG VON PARALLELEN VENTILEN
COMMANDE DE SOUPAPE PARALLÈLE

(30) Priority: 05.12.2017 DK PA201700686
(43) Date of publication of application: 12.06.2019
(73) Proprietor: Danfoss A/S, 6430 Nordborg (DK)
(72) Inventor: CHRISTENSEN, Svend Jørgen Kjærulff, 6430 Nordborg (DK)
(74) Representative: Petersen, Frank

(56) References cited:
- WO-A1-2013/186299
- Anonymous: "Deadband - Wikipedia", , 12 October 2017 (2017-10-12), XP055681510, Retrieved from the Internet: URL:https://en.wikipedia.org/w/index.php?t itle=Deadband&oldid=805018779 [retrieved on 2020-03-31]

## Description

### BACKGROUND

The present invention relates to a heating and/or cooling system where a first fluid (e.g. a heating or cooling fluid) is circulated through a first inlet line and first outlet line connected to some exchange of heat, such as for some domestic use like heating tapping water, radiators, floor heating systems.

The heating / cooling system may form part of a district heating system where the first inlet line and first outlet line is connected to a heating plant of any kind, or to a more local heating source like thermal solar panels etc.

To reduce, or optimize, energy consumption in the system valves usually are connected to such systems, these being adapted to regulate some fluid the system (e.g. the outlet return line fluid) to some specified temperature, or at least to be between specified temperature limits. Valves operating with sufficient precision, speed and span of operation (range of valve openings) may however easily be quite expensive. The present invention aims to solve e.g. this problem.

WO 2013/186299 A1 (BASELL POLYOLEFINE GMBH [DE]), 19 December 2013, shows a method for controlling the temperature in a polymerization reactor equipped with a cycle gas line for withdrawing reactor gas from the reactor, leading it through a heat-exchanger and feeding it back to the reactor by adjusting the temperature of the cooling medium entering the heat exchanger a cooling system in which, for cooling heat exchanger, a cooling medium is fed to an heat exchanger and withdrawn from heat exchanger. The amount of fresh cooling medium entering the cooling system via a first line is controlled by two continuously operating a first and a second control valves, which are connected in parallel.The two valves are controlled by a controller combination, comprising a first and a second controllers and a limiting device, for controlling the flow rate of the cooling medium through the line. The flow rate setpoint for a first control valve is provided by the output of the first controller based on the temperature data of the cooling medium entering the heat exchanger measured in a temperature measuring device. If the output of the first controller is within the range of a limiting device the position of the second valve stays at the position where it is. If the output of controller is above the upper boundary of the centered range of limiting device the second controller modifies its output with the aim to open the second valve slowly.

### SUMMARY OF THE INVENTION

The solution according to the present invention is indicated in the claims. This includes having a heating and/or cooling system with a fluid circuit including a fluid inlet line and fluid outlet line connected to a heat exchanger, a temperature sensor measuring a fluid temperature T, wherein the fluid inlet (or outlet line includes a first valve and a second valve positioned in respectively a first and second parallel sub-lines forming a split section, and where the first and second valves are controlled according to input from a controller and operating with first V1 and second V2 valve openings respectively, where said controller is adapted to operate according to maintain said measured fluid temperature T to be within a normal temperature span, defined as a minimum temperature T1ₘᵢₙ and a maximum temperature T1ₘₐₓ, by changing settings of said first and second valves, where the controller is adapted to change the valve opening V1 of the first valve in response to the measured temperature T, and to change the valve opening V2 of the second valve in response to the first valve opening V1 gets above a maximum opening V1ₘₐₓ or below a minimum opening V1ₘᵢₙ. Hereby the first valve makes the quick response to the changing measured temperature, but may possible not operate very efficiently outside some relatively narrow span of valve openings, at least seen in relation to the expected required range of valve openings. It therefore gets assistance from the second valve, which may operate at a fixed opening until the first valve gets within the range defined by the maximum opening V1ₘₐₓ and minimum opening V1ₘᵢₙ. By setting the first valve to operate without correction as long as the temperature is within a given limit reduces the energy required to operate the valve, as well as reduces wear on the valve.

In one embodiment, the fluid inlet and outlet lines are connected to a primary side of a heat exchanger for circulating a heating and/or cooling fluid, and the temperature sensor is connected in relation to an outlet of a secondary side of the heat exchanger. Thereby it is possible to control the temperature fluid delivered to the domestic use, radiators etc., by changing the supplied flow rate, e.g. at a return (outlet) line or supply (inlet) line.

In one embodiment, the first valve reacts purely in response to the measured temperature T, and where the second valve reacts purely in response to the first valve opening V1.

Possible choices for the feedback control in response to changes in the measured temperature T, is that the first valve is controlled by a P, a PI or a PID control method.

In one embodiment, the first valve reacts purely in response to the measured temperature T, and where the second valve reacts in response to the first valve opening V1 and the measured temperature T. In this embodiment, it may be advantages that the first valve and second valves are controlled by a P, a PI or a PID control method.

In one embodiment, the controller is adapted to control the valves such that the first valve reacts purely in response to the measured temperature T, and where the second valve reacts purely in response to the first valve opening V1, when the measured temperature T is within an expanded temperature span defined as being between the lower temperature limit T2ₘᵢₙ and upper temperature limit T2ₘₐₓ, where T2ₘᵢₙ is lower than or equal to T1ₘᵢₙ, and T2ₘₐₓ is higher than or equal to T1ₘₐₓ, and such that the first valve reacts purely in response to the measured temperature T, and where the second valve reacts in response to the first valve opening V1 and the measured temperature T. In this embodiment, it may be advantages that the first valve and second valves are controlled by a P, a PI or a PID control method, when the measured temperature T is outside said expanded temperature span.

The present invention further may include the method to control a first valve and a second valve positioned in respectively a first and second parallel sub-lines forming a split section, and where the first and second valves are controlled according to input from a controller and operating with first V1 and second V2 valve openings respectively, said method including to operate according to maintain a measured fluid temperature T to be within a normal temperature span, defined as a minimum temperature T1min and a maximum temperature T1ₘₐₓ, by changing settings of said first and second valves, characterized in that the valve opening V1 of the first valve is changed in response to the measured temperature T, and the valve opening V2 of the second valve is changed in response to the first valve opening V1 gets above a maximum opening V1ₘₐₓ or below a minimum opening V1ₘᵢₙ.

The present invention further may include a method to control a first valve and a second valve positioned in respectively a first and second parallel sub-lines forming a split section, were the method includes the steps of:
- measuring the temperature T,
- check if T is between T1min and T1max,
- if T is between T1min and T1max, then the first valve operates in basic mode not responding to any changes and the second valve operates in basic mode not responding to any changes
- if T is outside T1min and T1max, then the first valve operates in control mode in response to the measured temperature T, and it is checked if the first valve opening V1 is between V1min and V1max,
- if the first valve opening V1 is between V1min and V1max, then the second valve continues to operate in basic mode not responding to any changes
- if the first valve opening V1 is outside the limits of V1min and V1max, then the first valve operates in control mode in response to the measured temperature T, and the second valve operates in shifted mode with increased or decreased valve opening V2.

The present invention further may include a method to control a first valve and a second valve positioned in respectively a first and second parallel sub-lines forming a split section, the method includes the steps of:
- measuring the temperature T,
- check if T is between T1min and T1max,
- if T is between T1min and T1max, then the first valve operates in basic mode not responding to any changes and the second valve operates in basic mode not responding to any changes
- if T is outside T1min and T1max, then the first valve operates in control mode in response to the measured temperature T,
- if T is outside T1min and T1max, then it is checked if T is between T2min and T2max,
- if T is not between T2min and T2max, the second valve operates in control mode in response to the measured temperature T
- if T is between T2min and T2max, then it is checked if the first valve opening V1 is between V1min and V1max,
- if T is between T2min and T2max, and the first valve opening V1 is between V1min and V1max, then the second valve operates in basic mode not responding to any changes
- if T is between T2min and T2max, but the first valve opening V1 is outside V1min and V1max, then the second valve operates in shifted mode with increased or decreased valve opening V2.

### FIGURES

- Fig. 1: A first embodiment position of the split section according to the present invention.
- Fig. 2: A second embodiment position of the split section according to the present invention.
- Fig. 3: A third embodiment position of the split section according to the present invention.
- Fig. 4: A first embodiment illustration of regulation of the first and second valves in the split section in dependence to the measured temperature and the first valve opening.
- Fig. 5: A second embodiment illustration of regulation of the first and second valves in the split section in dependence to the measured temperature and the first valve opening.
- Figs. 6A&B: Two embodiment setting methods of valves according to the present invention.
- Fig. 7: A flow chart illustrating a first embodiment method of regulation of the first and second valves of the split section.
- Fig. 8: A flow chart illustrating a second embodiment method of regulation of the first and second valves of the split section.

### DETAILED DESCRIPTION OF THE INVENTION

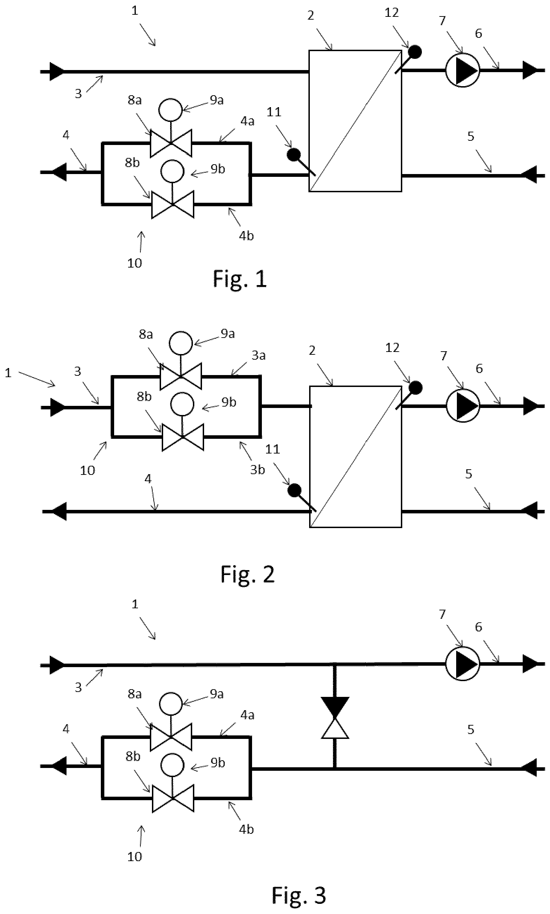

Figures 1 and 2 illustrates embodiments of a section of a heating and/or cooling system (1) where a first fluid (e.g. a heating or cooling fluid) is circulated through the first side (like primary side) of a heat exchanger (2) through a first inlet line (3) and first outlet line (4). A second fluid (e.g. water) is circulated through the second side (like the secondary side) of the heat exchanger (2) by second inlet line (5) and second outlet line (6). In the heat exchanger (2) heat is being transferred from either the first fluid to the second fluid or the second fluid to the first fluid.

In one embodiment, the heating / cooling system (1) forms part of a district heating system where the first inlet line (3) and first outlet line (4) is connected to a heating plant of any kind, or to a more local heating source like thermal solar panels etc. The second inlet line (5) and second outlet line (6) may form part of a domestic heating and / or cooling system connected to tapping units, showers, radiators, floor heating systems, air conditioners, distribution stations, energy production plants, etc.

Figure 3 illustrate an embodiment with e.g. a direct connection of a heating supply, thus having no intermediate heat exchanger (2).

Pumping means (7) may be connected to circulated the second fluid just as pumping means (not disclosed) may connected to circulate the first fluid. In the illustrations of figs. 1 and 2 the pumping means (7) is seen to be positioned at the second outlet line (6), but it may be positioned at any suitable position in the circuit.

Figures 1 and 3 shows the first outlet, or return, (4) line having a split section (10) of two parallel first outlet sub-lines (4a, 4b), the first (4a) comprising a first flow controlling means (8a), in the following referred to as a first valve controlled by first regulating means (9a), like an actuator, and the second sub-line (4b) comprises a second flow controlling means (8b), in the following referred to as a second valve controlled by second regulating means (9b), like an actuator.

In figure 2 the split section (10) instead is positioned at the first inlet line (3) forming two parallel first inlet sub-lines (3a, 3b).

In other not illustrated embodiments the split section (10) alternatively is positioned at the second inlet line (5) or the second outlet line (6).

Temperature sensors (11, 12) may be positioned to measure the temperatures of the first fluid and second fluid respectively, such as in the illustrated embodiment being positioned at the respective first outlet and second outlet of the heat exchanger (2). The temperature sensor (12) measuring the fluid as entering the second outlet line (6) from the heat exchanger (2) this may measure the heated second fluid entering the domestic heating /cooling system.

The first (8a) and second (8b) valves may be of different sizes, or at least adapted to operate such that e.g. the second valve (8b) may pass a higher flow rate through the second sub-line (4b, 3b) than the first valve (8a) passes through the first sub-line (4a, 3a), the sum of the flows two sub-lines being the total flow through the first outlet line (4), or alternatively the first inlet line (3), second inlet line (5) or second outlet line (6).

The following example of embodiment of the present invention is based on the embodiment of fig. 1, but applies to any of the positions of the split section (10) and with or without a heat exchanger (2).

The first valve (8a) may be adapted to be controlled at a higher resolution than the second valve (8b), e.g. continuous or at least at smaller but higher number of steps.

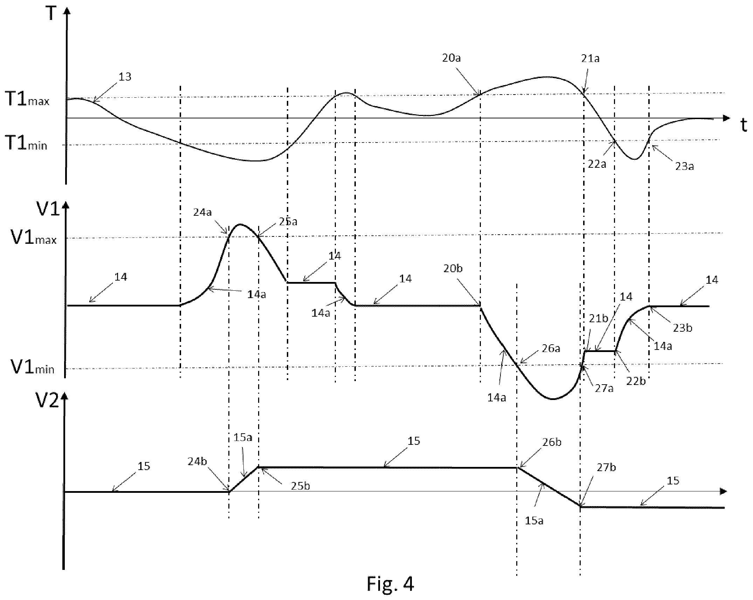

Figure 4 illustrate an embodiment of the control of the first valve (8a) and second valve (8b) respectively. The first valve (8a) has a defined preferred range of valve openings, corresponding to a range of flow rates through the first sub-line (4a), between a minimum V1ₘᵢₙ and a maximum V1ₘₐₓ.This range may be defined in dependence of the range where the first valve (8a) operates most efficient.

The upper graph in figure 4 illustrates a measured temperature T, such as the temperature T measured by the temperature sensor (12) connected to measure the second fluid temperature as entering the second outlet line (6).

The first valve (8a) and second valve (8b) in this embodiment is adapted to control the flow rate of the first fluid in response to changes in the measured temperature T. The temperature T is defined to operate between a minimum temperature T1ₘᵢₙ and a maximum temperature T1ₘₐₓ, which is being the 'normal' temperature span defined as an acceptable range of fluctuation of the temperature T, which in the upper graph of figure 4 is illustrated of the wavy line (13). The relation is such that T1ₘₐₓ is greater than or equal to T1ₘᵢₙ. In case they are equal this thus means the system controls to maintain to this single temperature.

In an embodiment, the first valve (8a) makes the basic, or direct, response to the temperature T getting out of the limits, meaning being higher T1max than or lower than T1ₘᵢₙ. In the illustration of fig. 4 in the areas where measured temperature T is within the limits T1ₘᵢₙ and T1ₘₐₓ the first valve (8a) is operated in a normal mode (14) where it maintained (14) at its present valve opening V, meaning it is kept (substantially) constant. When e.g. the measured temperature T raises above the upper limit T1ₘₐₓ (20a), or alternatively below (22a) the lower limit T1ₘᵢₙ, then the first valve (8a) responds (20b) by entering a control mode (14a) where its valve opening V1 is regulated continuously. By continuous is in the context of the present invention is in general meant it either is continuous in the basic definition, or at least done in some steps in time and/or in steps in the change of the first valve opening V1, these possible being at least in substantially smaller than those of the second valve (8b) in its first operation mode, as it will be defined later.

The change of the first valve opening V1 is done in response to the measured temperature T to counter the temperature change. By changing the flow rate associated with the first valve (8a), such as the first fluid, this then affects the heat exchanged in the heat exchanger (2) and thus the temperature T of the fluid being measured.

In the same manner, when the temperature T again reaches (21a, 23a) within the limits between T1ₘᵢₙ and T1ₘₐₓ then the first valve (8a) returns to the normal mode (14). In one embodiment, when entering the normal mode (14), the first valve opening V1 simply is the valve opening of the first valve (8a) at the time when the temperature returns into the limit between T1ₘᵢₙ and T1ₘₐₓ, as is also the case in the illustrated embodiment of figure 4. In another embodiment, the normal mode (14) is associated with a defined first valve opening V1, and once the temperature returns to the normal temperature span between T1ₘᵢₙ and T1ₘₐₓ the first valve (8a) is set to this defined first valve opening V1.

The lowest of the three figures in figure 4 illustrate the operation of the second valve (8b), in an embodiment being the 'larger' of the two valves. In the illustrated embodiment, this is capable of being set to increasing or decreasing valve openings V2, where this may be defined either as actual changed valve opening V2, or at least changed in a manner where the flow rate through the valve is changed. The change (15a) may be abrupt, step-vice or as illustrated, substantially continuous). Where the first valve (8a) is regulated in dependence to the measured temperature T, then the second valve (8b) is regulated in dependence to the first valve opening V1 of the first valve (8a). More specifically, it may be regulated by a change of mode in dependence to the first valve opening V1 passing (24a, 25a, 26a, 27a) the defined minimum V1ₘᵢₙ and maximum V1ₘₐₓ thresholds.

In the illustration one such embodiment is shown. The middle one of the three graphs illustrate two instances where the first valve opening V1 is out of the safe limit between V1ₘᵢₙ and V1ₘₐₓ the second valve (8b) enters a shifted mode (15a). In the illustrated embodiment, when the first valve opening V1 reaches above (24a) the upper limit value V1ₘₐₓ, the second valve (8b) changes to the shifted mode (15a) with increasing valve opening V2. In the same manner, when the first valve opening V1 reaches below (26a) the lower limit value V1ₘᵢₙ, the second valve (8b) changes to the shifted mode (15a) with decreased valve opening V2. Once the first valve opening V1 returns back (25a, 27a) to within the safe limit V1ₘᵢₙ and V1ₘₐₓ the second valve (8b) returns to the basic mode (15), where present valve opening V2 at the time then is the new constant basic mode (15) second valve opening V2. Alternative embodiments include the second valve opening V2 returning back to some defined basic opening of the basic mode (15).

In one embodiment the mode (14, 14a) of the first valve (8a) remains unchanged of the change of mode (15, 15a) of the second valve (8b). The change of the second valve (8b) however changes the total flow through the split section (10), which therefore influences the temperature T. In this manner, the second valve (8b) in the shifted mode (15b) assists the first valve (8a), at least until this has reached within the safe limits of V1ₘᵢₙ and V1ₘₐₓ.

The response of the first valve (8a) to the temperature T may be any feedback control method, such as a P, a PI or a PID control method.

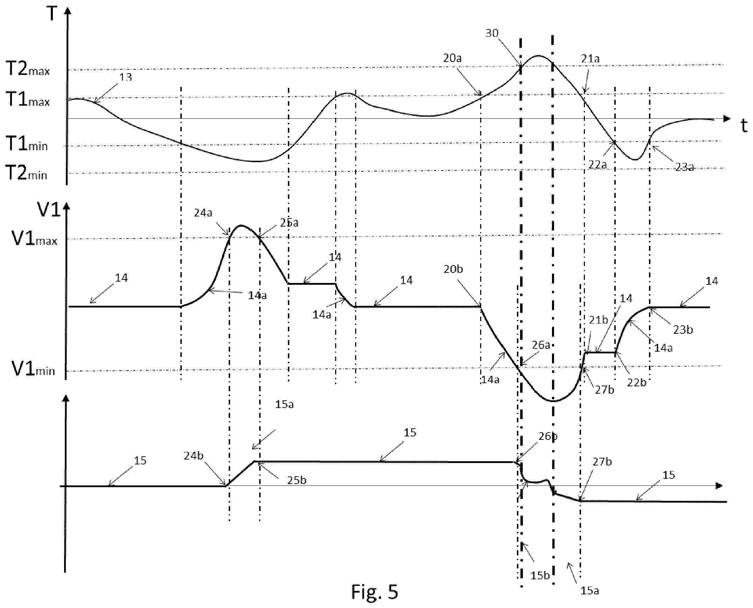

Figure 5 illustrate a further embodiment possible building on top of the embodiment of figure 4, where an expanded temperature span is defined between lower temperature limit T2ₘᵢₙ and upper temperature limit T2ₘₐₓ, where T2ₘᵢₙ is lower than or equal to T1ₘᵢₙ, and T2ₘₐₓ is higher than or equal to T1max. When the temperature T reaches out of the expanded temperature span (30), below limit T2ₘᵢₙ or above temperature limit T2ₘₐₓ, then the second valve (8b) enters a control mode (15b) from the shifted mode (15a). In this control mode (15b) the second valve (8b) too is regulated in a response of the first valve (8a) and second valve (8b) changes to the temperature T, where this may be any feedback control method, such as a P, a PI or a PID control method. In the control mode (15b) the second valve (8b) may be operated at a significant higher resolution, e.g. continuous, than that of the shifted mode (15a). This ensures a higher, or correspondingly lower, 'assistance' from the second valve (8b) in the more extreme periods. When the measured temperature T becomes too high for the first valve (8a) to be able correspond sufficiently quick, the second valve (8b), by changing to the control mode (15b), then assists in the control in responding directly to the changing measured temperature T in addition to the first valve (8a).

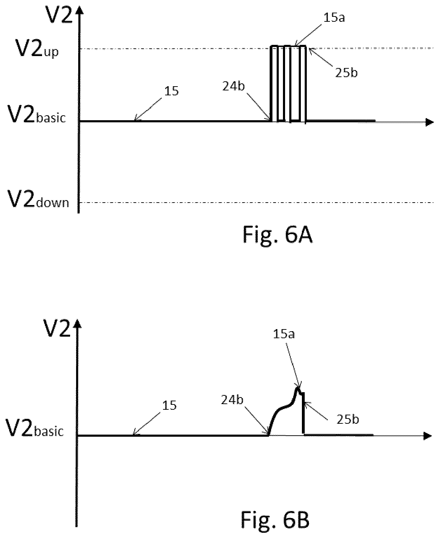

Figures 6A and 6B illustrate two alternative embodiment of the shifted mode (15a) (where this also may apply to the control mode (15b)). In figure 6A the shifted mode (15a) (and/or control mode (15b)) consists of a range of pulses at some frequency, rather than being a 'continuous' increased, or reduced, level as in figures 4 and 5. In one embodiment all the modes (15, 15a, 15b) are formed by pulses, the difference being either a change of the level/amplitude or frequency.

In the embodiment of figure 6B the shifted mode (15a) itself is changed continuous, e.g. in relation to the first valve opening V1.

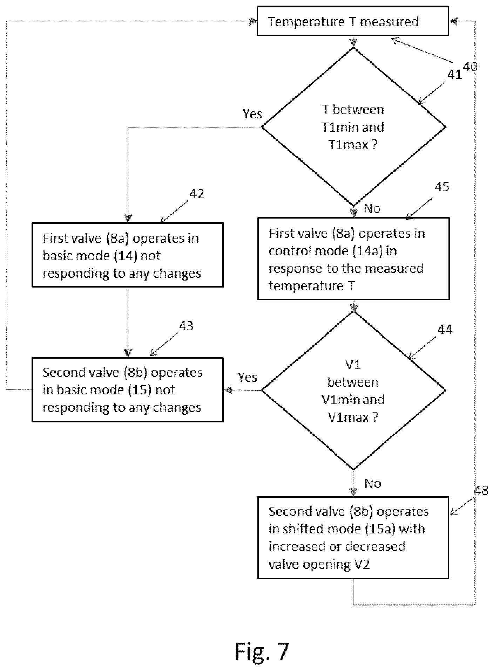

Fig. 7 shows a flow chart of a first embodiment method of control according to the present system, were the method includes the steps of:
- measuring (40) the temperature T,
- check (41) if T is between T1min and T1max,
- if T is between T1min and T1max, then (42) the first valve (8a) operates in basic mode (14) not responding to any changes and (43) and the second valve (8b) operates in basic mode (15) not responding to any changes
- if T is outside T1min and T1max, then (45) the first valve (8a) operates in control mode (14a) in response to the measured temperature T, and it is checked (44) if the first valve opening V1 is between V1min and V1max,
- if the first valve opening V1 is between V1min and V1max, then (43) the second valve (8b) continues to operate in basic mode (15) not responding to any changes
- if the first valve opening V1 is outside the limits of V1min and V1max, then (45) the first valve (8a) operates in control mode (14a) in response to the measured temperature T, and (48) the second valve (8b) operates in shifted mode (15a) with increased or decreased valve opening V2.

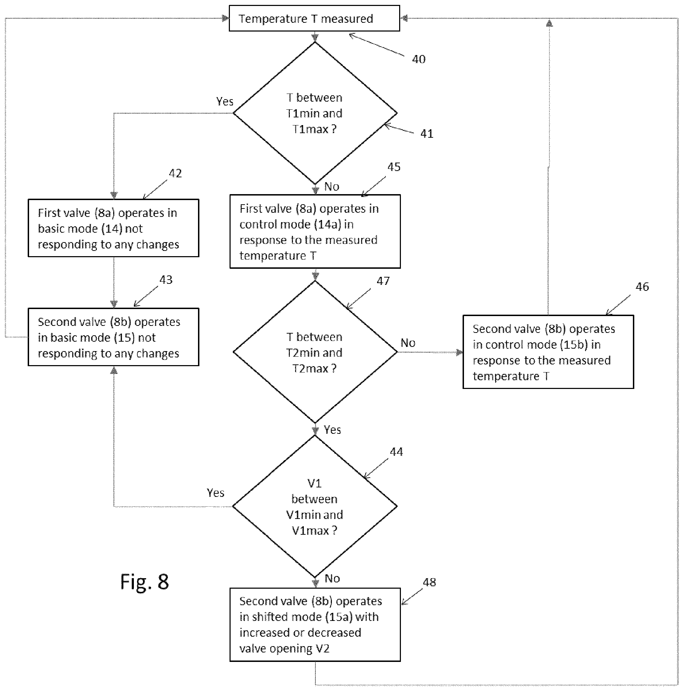

Fig. 8 illustrates the more advanced version of the method of control, were the method includes the steps of:
- measuring (40) the temperature T,
- check (41) if T is between T1min and T1max,
- if T is between T1min and T1max, then (42) the first valve (8a) operates in basic mode (14) not responding to any changes and (43) and the second valve (8b) operates in basic mode (15) not responding to any changes
- if T is outside T1min and T1max, then (45) the first valve (8a) operates in control mode (14a) in response to the measured temperature T,
- if T is outside T1min and T1max, then (45) it is checked (47) if T is between T2min and T2max,
- if T is not between T2min and T2max, the second valve (8b) operates in control mode (15b) in response to the measured temperature T
- if T is between T2min and T2max, then it is checked (44) if the first valve opening V1 is between V1min and V1max,
- if T is between T2min and T2max, and the first valve opening V1 is between V1min and V1max, then (43) the second valve (8b) operates in basic mode (15) not responding to any changes
- if T is between T2min and T2max, but the first valve opening V1 is outside V1min and V1max, then (48) the second valve (8b) operates in shifted mode (15a) with increased or decreased valve opening V2.

## Claims

1. Heating and/or cooling system (1) with a fluid circuit including a fluid inlet line (3, 5) and fluid outlet line (4, 6) connectable to a heat exchanger, a temperature sensor (11, 12) for measuring a fluid temperature T, and a controller, wherein the fluid inlet (3, 5) or outlet line (4, 6) includes a split section (10) and a first valve (8a) and a second valve (8b) positioned in respectively a first (3a, 4a) and second (3b, 4b) parallel sub-lines forming the split section (10), and where the first (8a) and second (8b) valves are configured to be controlled according to input from the controller and to operate with first V1 and second V2 valve openings respectively, where said controller is adapted to operate to maintain said measured fluid temperature T within a normal temperature span, defined as a minimum temperature T1min and a maximum temperature T1max, by changing settings of said first (8a) and second valves (8b), wherein the controller is adapted to operate the first valve (8a) in a basic mode (14) not responding to any changes of the fluid temperature T if T is between T1min and T1max, and to operate the second valve (8b) in a basic mode (15) with a basic mode second valve opening V2 not responding to any changes of the fluid temperature T, and to change the valve opening V1 of the first valve (8a) in response to the measured temperature T if T is not between T1min and T1max, and to change the valve opening V2 of the second valve (8b) in response to the first valve opening V1 when the first valve opening V1 gets above a maximum opening V1max or below a minimum opening V1min, wherein said fluid inlet (3, 5) and outlet lines (4, 6) are connectable to a primary side of the heat exchanger (2) for circulating a heating and/or cooling fluid, and the temperature sensor (12) is connectable in relation to an outlet of a secondary side of the heat exchanger (2), **characterized in that** the controller is adapted to control the valves such that the first valve (8a) reacts purely in response to the measured temperature T, and where the second valve (8b) reacts purely in response to the first valve opening V1, when the measured temperature T is within an expanded temperature span defined as being between the lower temperature limit T2ₘᵢₙ and upper temperature limit T2ₘₐₓ, where T2ₘᵢₙ is lower than or equal to T1ₘᵢₙ, and T2ₘₐₓ is higher than or equal to T1ₘₐₓ, and such that the first valve (8a) reacts purely in response to the measured temperature T, and the second valve (8b) reacts in response to the first valve opening V1 and the measured temperature T, when the measured temperature T is outside said expanded temperature span.

2. Heating and/or cooling system (1) according to claim 1, wherein the first valve (8a) is controlled by a P, a PI or a PID control method.

3. Heating and/or cooling system (1) according to claim 1, wherein the first valve (8a) and second valves (8b) are controlled by a P, a PI or a PID control method.

4. Method to control a first valve (8a) and a second valve (8b) positioned in respectively a first (3a, 4a) and second (3b, 4b) parallel sub-lines forming a split section (10), the method including the steps of:
- measuring (40) a fluid temperature T,
- check (41) if T is between T1min and T1max,
- if T is between T1min and T1max, then (42) the first valve (8a) operates in basic mode (14) not responding to any changes of T, and (43) the second valve (8b) operates in basic mode (15) with a basic mode second valve opening V2 not responding to any changes of
- if T is outside T1min and T1max, then (45) the first valve (8a) operates in control mode (14a) changing a first valve opening V1 of the first valve (8a) in response to the measured fluid temperature T,
- if T is outside T1min and T1 max, then (45) it is checked (47) if T is between T2min and T2max,
- if T is not between T2min and T2max, the second valve (8b) operates in control mode (15b) where the second valve opening V2 is changed in response to the measured fluid temperature T
- if T is between T2min and T2max, then it is checked (44) if the first valve opening V1 is between V1min and V1max,
- if T is between T2min and T2max, and the first valve opening V1 is between V1 min and V1max, then (43) the second valve (8b) operates in basic mode (15) where it is not responding to any changes of T
- if T is between T2min and T2max, but the first valve opening V1 is outside V1min and V1max, then (48) the second valve (8b) operates in shifted mode (15a) with increased or decreased valve opening V2 relative to basic mode second valve opening V2.

## Patentansprüche

1. Heiz- und/oder Kühlsystem (1) mit einem Fluidkreislauf, umfassend eine Fluideinlassleitung (3, 5) und eine Fluidauslassleitung (4, 6), die an einen Wärmetauscher anschließbar sind, einen Temperatursensor (11, 12) zum Messen einer Fluidtemperatur T und eine Steuervorrichtung, wobei die Fluideinlass- (3, 5) oder -Auslassleitung (4, 6) einen geteilten Abschnitt (10) und ein erstes Ventil (8a) und ein zweites Ventil (8b) umfasst, die jeweils in einer ersten (3a, 4a) und in einer zweiten (3b, 4b) parallelen Subleitung ausgebildet sind, die den geteilten Abschnitt (10) ausbilden, und wobei das erste (8a) und das zweite (8b) Ventil eingerichtet sind, um gemäß einer Eingabe aus der Steuervorrichtung gesteuert zu werden und mit einer ersten V1 bzw. einer zweiten V2 Ventilöffnung zu arbeiten, wobei die Steuerung eingerichtet ist, um zum Aufrechterhalten der gemessenen Fluidtemperatur T innerhalb einer Normaltemperaturspanne zu arbeiten, die als eine minimale Temperatur T1min und eine maximale Temperatur T1max definiert ist, indem Einstellungen des ersten (8a) und des zweiten Ventils (8b) verändert werden, wobei die Steuerung eingerichtet ist, um das erste Ventil (8a) in einer grundlegenden Betriebsart (14) zu betreiben, die nicht auf Veränderungen der Fluidtemperatur T reagiert, wenn T zwischen T1min und T1max liegt, und um das zweite Ventil (8b) in einer grundlegenden Betriebsart (15) zu betreiben, wobei eine grundlegenden Betriebsart der zweiten Ventilöffnung V2 nicht auf Veränderungen der Fluidtemperatur T reagiert, und um die Ventilöffnung V1 des ersten Ventils (8a) als Reaktion auf die gemessene Temperatur T zu verändern, wenn T nicht zwischen T1min und T1max liegt, und um die Ventilöffnung V2 des zweiten Ventils (8b) als Reaktion auf die erste Ventilöffnung V1 zu verändern, wenn die erste Ventilöffnung V1 größer als eine maximale Öffnung V1max oder kleiner als eine minimale Öffnung V1min ist, wobei die Fluideinlass- (3, 5) und -Auslassleitung (4, 6) an eine Primärseite des Wärmetauschers (2) anschließbar sind, um eine Heiz- und/oder Kühlflüssigkeit zu zirkulieren, und der Temperatursensor (12) in Bezug auf einen Auslass einer Sekundärseite des Wärmetauschers (2) anschließbar ist,
**dadurch gekennzeichnet, dass** die Steuerung eingerichtet ist, um die Ventile zu steuern, so dass das erste Ventil (8a) rein als Reaktion auf die gemessene Temperatur T reagiert, und wobei das zweite Ventil (8b) rein als Reaktion auf die erste Ventilöffnung V1 reagiert, wenn die gemessene Temperatur T innerhalb einer erweiterten Temperaturspanne liegt, die als zwischen der unteren Temperaturgrenze T2min und der oberen Temperaturgrenze T2max liegend definiert ist, wobei T2min kleiner oder gleich T1min ist und T2max größer oder gleich T1max ist, und so dass das erste Ventil (8a) rein als Reaktion auf die gemessene Temperatur T reagiert und das zweite Ventil (8b) als Reaktion auf die erste Ventilöffnung V1 und die gemessene Temperatur T reagiert, wenn die gemessene Temperatur T außerhalb der erweiterten Temperaturspanne liegt.

2. Heiz- und/oder Kühlsystem (1) nach Anspruch 1, wobei das erste Ventil (8a) durch ein P-, ein PI- oder ein PID-Steuerungsverfahren gesteuert wird.

3. Heiz- und/oder Kühlsystem (1) nach Anspruch 1, wobei das erste Ventil (8a) und das zweite Ventil (8b) durch ein P-, ein PI- oder ein PID-Steuerungsverfahren gesteuert wird.

4. Verfahren zum Steuern eines ersten Ventils (8a) und eines zweiten Ventils (8b), die jeweils in einer ersten (3a, 4a) und einer zweiten (3b, 4b) parallelen Subleitung angeordnet sind, die einen geteilten Abschnitt (10) ausbilden, das Verfahren die folgenden Schritte umfassend:
- Messen (40) einer Fluidtemperatur T,
- Prüfen (41), ob T zwischen T1min und T1max liegt,
- wenn T zwischen T1min und T1max liegt, dann (42) arbeitet das erste Ventil (8a) in einer grundlegenden Betriebsart (14), die nicht auf Veränderungen von T reagiert, und (43) arbeitet das zweite Ventil (8b) in einer grundlegenden Betriebsart (15), wobei eine zweite Ventilöffnung V2 in einer grundlegenden Betriebsart nicht auf Veränderungen von T reagiert,
- wenn T außerhalb von T1min und T1max liegt, dann (45) arbeitet das erste Ventil (8a) in einer Steuerungsbetriebsart (14a), die eine erste Ventilöffnung V1 des ersten Ventils (8a) als Reaktion auf die gemessene Fluidtemperatur T verändert,
- wenn T außerhalb von T1min und T1max liegt, dann (45) wird geprüft (47), ob T zwischen T2min und T2max liegt,
- wenn T nicht zwischen T2min und T2max liegt, arbeitet das zweite Ventil (8b) in einer Steuerungsbetriebsart (15b), wobei die zweite Ventilöffnung V2 als Reaktion auf die gemessene Fluidtemperatur T verändert wird,
- wenn T zwischen T2min und T2max liegt, dann wird geprüft (44), ob die erste Ventilöffnung V1 zwischen V1min und V1max liegt,
- wenn T zwischen T2min und T2max liegt und die erste Ventilöffnung V1 zwischen V1min und V1max liegt, dann (43) arbeitet das zweite Ventil (8b) in einer grundlegenden Betriebsart (15), wobei es nicht auf Veränderungen von T reagiert,
- wenn T zwischen T2min und T2max liegt, doch die erste Ventilöffnung V1 außerhalb von V1min und V1max liegt, dann (48) arbeitet das zweite Ventil (8b) in einer verschobenen Betriebsart (15a) mit einer erhöhten oder verminderten Ventilöffnung V2 in Bezug auf eine zweite Ventilöffnung V2 der grundlegenden Betriebsart.

## Revendications

1. Système de chauffage et/ou de refroidissement (1) avec un circuit de fluide comportant une conduite d'entrée de fluide (3, 5) et une conduite de sortie de fluide (4, 6) raccordables à un échangeur de chaleur, un capteur de température (11, 12) pour mesurer une température de fluide T, et un contrôleur, la conduite d'entrée (3, 5) ou de sortie (4, 6) de fluide comportant une section divisée (10) et une première vanne (8a) et une deuxième vanne (8b) respectivement positionnées dans des première (3a, 4a) et deuxième (3b, 4b) sous-conduites parallèles formant la section divisée (10), et les première (8a) et deuxième (8b) vannes étant configurées pour être contrôlées en fonction d'une entrée provenant du contrôleur et pour fonctionner avec des première V1 et deuxième V2 ouvertures de vanne, respectivement, ledit contrôleur étant adapté pour fonctionner pour maintenir ladite température de fluide mesurée T à l'intérieur d'une gamme de température normale, définie comme une température minimale T1min et une température maximale T1max, en modifiant des réglages desdites première (8a) et deuxième (8b) vannes, le contrôleur étant adapté pour faire fonctionner la première vanne (8a) dans un mode de base (14) ne répondant à aucune modification de la température de fluide T si T se situe entre T1min et T1max, et pour faire fonctionner la deuxième vanne (8b) dans un mode de base (15) avec une deuxième ouverture de vanne V2 en mode de base ne répondant à aucune modification de la température de fluide T, et pour modifier l'ouverture de vanne V1 de la première vanne (8a) en réponse à la température mesurée T si T ne se situe pas entre T1min et T1max, et pour modifier l'ouverture de vanne V2 de la deuxième vanne (8b) en réponse à la première ouverture de vanne V1 quand la première ouverture de vanne V1 passe au-dessus d'une ouverture maximale V1max ou au-dessous d'une ouverture minimale V1min, lesdites conduites d'entrée (3, 5) et de sortie (4, 6) de fluide étant raccordables à un côté primaire de l'échangeur de chaleur (2) pour faire circuler un fluide de chauffage et/ou de refroidissement, et le capteur de température (12) étant raccordable en relation avec une sortie d'un côté secondaire de l'échangeur de chaleur (2),
**caractérisé en ce que** le contrôleur est adapté pour contrôler les vannes de telle sorte que la première vanne (8a) réagit uniquement en réponse à la température mesurée T et la deuxième vanne (8b) réagit uniquement en réponse à la première ouverture de vanne V1 quand la température mesurée T se situe à l'intérieur d'une gamme de température étendue définie comme se situant entre la limite inférieure de température T2min et la limite supérieure de température T2max, T2min étant inférieure ou égale à T1min, et T2max étant supérieure ou égale à T1max, et de telle sorte que la première vanne (8a) réagit uniquement en réponse à la température mesurée T et la deuxième vanne (8b) réagit en réponse à la première ouverture de vanne V1 et à la température mesurée T quand la température mesurée T se situe à l'extérieur de ladite gamme de température étendue.

2. Système de chauffage et/ou de refroidissement (1) selon la revendication 1, dans lequel la première vanne (8a) est contrôlée par un procédé de contrôle P, PI ou PID.

3. Système de chauffage et/ou de refroidissement (1) selon la revendication 1, dans lequel la première vanne (8a) et la deuxième vanne (8b) sont contrôlées par un procédé de contrôle P, PI, ou PID.

4. Procédé de contrôle d'une première vanne (8a) et d'une deuxième vanne (8b) respectivement positionnées dans des première (3a, 4a) et deuxième (3b, 4b) sous-conduites parallèles formant une section divisée (10), le procédé comportant les étapes de :
- mesure (40) d'une température de fluide T,
- vérification (41) que T se situe ou non entre T1min et T1max,
- si T se situe entre T1min et T1max, alors (42) la première vanne (8a) fonctionne dans un mode de base (14) ne répondant à aucune modification de T, et (43) la deuxième vanne (8b) fonctionne dans un mode de base (15) avec une deuxième ouverture de vanne V2 en mode de base ne répondant à aucune modification de T,
- si T se situe à l'extérieur de T1min et T1max, alors (45) la première vanne (8a) fonctionne dans un mode de contrôle (14a) modifiant une première ouverture de vanne V1 de la première vanne (8a) en réponse à la température de fluide mesurée T,
- si T se situe à l'extérieur de T1min et T1max, alors (45) il est vérifié (47) si T se situe entre T2min et T2max,
- si T ne se situe pas entre T2min et T2max, la deuxième vanne (8b) fonctionne dans un mode de contrôle (15b) où la deuxième ouverture de vanne V2 est modifiée en réponse à la température de fluide mesurée T,
- si T se situe entre T2min et T2max, alors il est vérifié (44) si la première ouverture de vanne V1 se situe entre V1min et V1max,
- si T se situe entre T2min et T2max, et la première ouverture de vanne V1 se situe entre V1min et V1max, alors (43) la deuxième vanne (8b) fonctionne dans un mode de base (15) où elle ne répond à aucune modification de T,
- si T se situe entre T2min et T2max, mais la première ouverture de vanne V1 se situe à l'extérieur de V1min et V1max, alors (48) la deuxième vanne (8b) fonctionne dans un mode décalé (15a) avec une ouverture de vanne V2 augmentée ou diminuée par rapport à la deuxième ouverture de vanne V2 en mode de base.
